# EUROPEAN PATENT APPLICATION

(11) **EP 1 995 904 A1**
(43) Date of publication of application: **26.11.2008**
(21) Application number: 07010071.4
(22) Date of filing: 21.05.2007
(51) Int. Cl.: H04L 5/02

(54) **Method and apparatus for frequency division multiple access transmission and reception**

(71) Applicant: Nokia Siemens Networks Oy, 02610 Espoo (FI); Fraunhofer-Gesellschaft zur Förderung der angewandten Forschung e.V., 80686 München (DE)
(72) Inventor: Haustein, Thomas, Dr., 81735 München (DE); Ibing, Andreas, 14055 Berlin (DE); Jungnickel, Volker, Dr., 10318 Berlin (DE)
(74) Representative: Schober, Ralf Stefan

(57) **Abstract**

A frequency division multiple access receiving method comprises in a receiver the steps of obtaining from sub-channels symbol sequences from the received signals, repeating the individual symbols by a repetition number r, applying multiplicatively to the repeated symbols a term exp(-j*2*n*mk*n/N), wherein mk is a shift offset of a respective sequence, n is a running index indicating the symbol position in the modified sequence and N is the number of simultaneously processed sub-channels, adding correspondingly positioned symbols across the multiplied symbol sequences, applying an inverse Fourier transformation in parallel to the obtained sums and post-processing the data resulting from the inverse Fourier transformation, wherein the repetition number r is an integer fraction of the number N of simultaneously processed sub-channels and the shift offset mk is determined such as to obtain a Fourier transform in which the outputs from respectively different symbol sequences are located on respectively different sub-channels.

## Description

The invention relates to a method and an apparatus of frequency division multiple access reception and transmission. Particularly, it relates to single channel frequency division multiplex access (SC-FDMA).

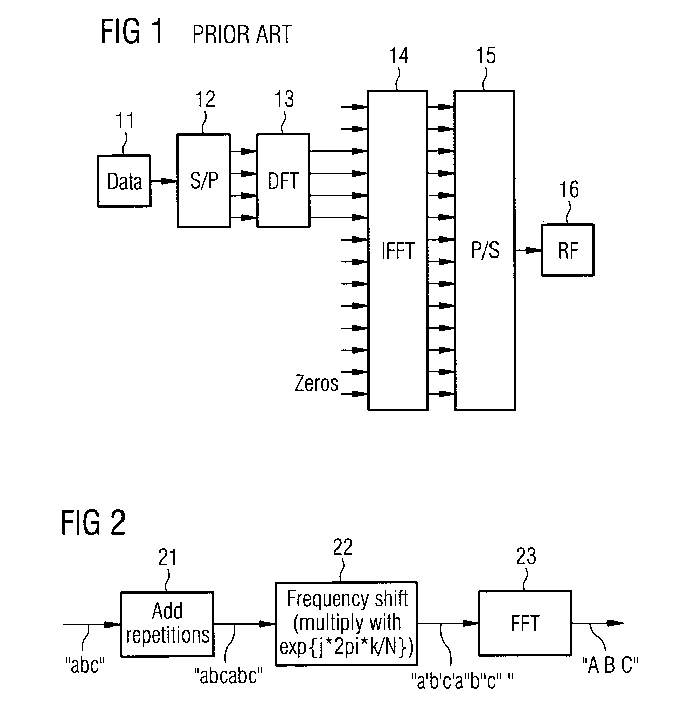

Figure 1 shows the structure of a known sender in this technical field. 11 symbolizes an incoming data stream which may be coded into symbols, such as PSK or QAM symbols. A serial parallel converter 12 converts an appropriate number of symbols into a parallel available symbol group. A Fourier transformation 13, preferably a digital Fourier transformation (DFT) or a fast Fourier transformation (FFT) is applied to the parallel symbols. The purpose of this transformation is avoiding problems as regards the peek to average power ratio (PAPR) in the subsequent processing steps, particularly in the analogue output. Depending on the system layout, the output of the Fourier transformation is mapped into the frequency domain either in a localized manner (as shown in Fig. 1), or it could also be distributed such that the outputs appear not at neighbouring outputs in the frequency domain, but are rather regularly and equally spaced distributed across the available sub-channels (corresponding to the inputs of the inverse Fourier transformation 14 shown in Fig. 1). The inverse Fourier transformed outputs of IFFT 14 are fed to parallel serial converter 15 and then fed to the analogue radio frequency module 16.

The incoming data sequences may be grouped according to users and may have for a given time different length corresponding to the different numbers of sub-channels allocated to different users. Thus, as far as one wants to maintain the userwise grouping of data to be processed, a DFT of appropriate size is needed. This would require the use of a variable DFT size or of plural DFT converters of respectively different width for accommodating the various widths required.

A variable DFT size can easily be rendered by a software implementation. But mobile communication requires fast components (processing speed) for matching the throughput/capacity needs. Thus, the DFTs 13 are preferred to be hardware implementations. There, it is difficult or inefficient to make them flexible, and it is expensive to provide plural hardware components of different width in parallel. Thus, supporting sending to, or receipt from, multiple users in wireless communication systems in a fast and cheap manner is difficult. At a transceiver, the present scheme uses only one fixed size DFT or IDFT depending on whether one is on the sending side or the receiving side.

Known prior art in this technical field is:
[1] "SC-FDMA Waveform Design, Performance, Power Dynamics and Evolution to MIMO", V. Jungnickel, T. Hindelang, T. Haustein, W. Zirwas, IEEE Portable 2007
[2] "3GPP TS 36.211 V0.2.2 (2006-12): Physical Channels and Modulation (Release 8)"; www.3gpp.org
[3] "Single-chip mixed-radix FFT Processor for real-time onboard SAR processing", L. Fanucci, M. Forluti, F. Gronchi, Proc. IEEE Int. Conf. on Electronics, Circuits and Systems, ICECS99, vol. II, pp. 1135-1138, Cyprus, Greece, 1999
[4] "Design of an efficient variable-length FFT processor", C.P. Hung, S.G. Chen, K.L. Chen, in Proceedings of the 2004 International Symposium on Circuits and Systems
[5] "A variable-length DHT-based FFT/IFFT processor for VDSL/ADSL systems", T.C. Pao, C.C. Chang, C.K. Wang, IEEE Asia-Pacific Conference on Circuits and Systems 2004
[6] "New Continuous-Flow Mixed-Radix (CFMR) FFT Processor Using Novel In-Place Strategy", B. G. Jo, M. H. Sunwoo, IEEE Transactions on Circuits and Systems, Vol. 52, No. 5, May 2005
[7] "VLSI Design of a Variable-Length FFT/IFFT Processor for OFDMBased Communication Systems", J.C. Kuo, C.H. Wen, C.H. Lin, A.Y. Wu, EURASIP Journal on Applied Signal Processing 2003:13, 13061316
[8] "3GPP TR 25.814 V7.1.0 (2006-09)", www.3gpp.org
[9] "An algorithm for the machine calculation of complex Fourier series", J.W. Cooley, J.W. Tukey, Math. Comput. 19:297-301, 1965
[10] "An Algorithm for Computing the Mixed Radix Fast Fourier Transform", R.C. Singleton, IEEE Trans. Audio Electroacoust., v. AU-17, p. 93, June 1969
[11] "Efficient synthesis and implementation of large discrete Fourier transformations", S.D. Morgera, Siam J. Comput. Vol. 9, No. 2, May 1980
[12] "On computing the discrete Fourier transform", S. Winograd, 1978, Math. Computation 32: 175-199.
[13] RF engines limited; www.rfel.com
[14] "On the Number of Multiplications Necessary to Compute a Length-2 DFT", M.T. Heideman, C.S. Burrus, IEEE Transactions on Acoustics, Speech and Signal Processing, Vol. ASSP-34, No. 1, Feb 1986
[15] US 2006/0291470A1

It is the object of the invention to provide an FDMA receiving and sending method and apparatus of flexible faster and cheaper construction.

This object is accomplished in accordance with the features of the independent claims. Dependent claims are directed on preferred embodiments of the invention.

A feature of the invention is that to a data stream repetitions thereof are added, a term providing a frequency shift is applied to the elements of the data stream including the repetitions, and the result is processed by a fixed size FFT/iFFT. The repetition of the initial data stream is made such that the resulting number of symbols matches the input width of the FFT.

According to the invention, a frequency division multiple access receiving method is rendered by which one or more individual data sequences coded into one or more respective individual symbol sequences sent from one or more senders can be received in a receiver via plural wireless sub-channels. The method comprises in the receiver the steps of pre-processing the received signals of the respective sub-channels for forming digital symbols and obtaining symbol sequences, a repetition step of repeating in said symbol sequences the individual symbols therein by a repetition number r for obtaining modified symbol sequences, wherein the repetition numbers for different symbol sequences may be different, a multiplying step of applying multiplicatively to the symbols of one or more of the modified symbol sequences a term exp(-j*2*n*mk*n/N), wherein mk is a shift offset of a respective sequence (corresponding to a user), n is a running index indicating the symbol position in the modified sequence, N is the number of simultaneously processed sub-channels, and j^2 is -1, an adding step of adding correspondingly positioned symbols across the modified symbol sequences for obtaining a sum sequence, applying an inverse Fourier transformation, preferably an inverse digital Fourier transformation (iDFT) or an inverse fast Fourier transformation (iFFT) in parallel to the sums of the sum sequence for obtaining a Fourier transform, and post-processing the data resulting from the inverse Fourier transformation. The repetition number r is an integer fraction of the number N of simultaneously processed sub-channels. The shift offset mk for each symbol sequence is determined such that after the Fourier transformation, the outputs resulting from respectively different symbol sequences are located on respectively different outputs.

A frequency division multiple access sending method may be configured in substantially the same way as the receiving method, with the difference, however, that the sums of the sum sequence are applied to a Fourier transformation (DFT, FFT), and the post-processing is different.

According to the invention, symbol streams requiring a DFT (on the sending side) or an iDFT (on the receiving side) are repeated to obtain a stream length corresponding to the input width of the DFT/iDFT, and in multi-user environments a multiplicative term is applied to the repeated sequences in order to appropriately position the respective results on the output side of the DFT/iDFT.

This method makes use of the following properties of the DFT/iDFT:
(a) The DFT of a periodic signal is a line spectrum. The repetition factor (number of periods in the signal) equals the distance of lines in the spectrum. Values between these lines are identical to zero.
(b) A cyclic shift of the spectrum corresponds to a frequency shift of the transformed signal.
(c) The DFT/iDFT is linear, meaning that the DFT/iDFT of a sum of individual signals is the sum of individual DFTs/iDFTs of each signal.

Due to these properties, the outputs of appropriately prepared and added symbol sequences can be added, transformed and thereafter separated again so that a fixed size (inverse) Fourier transformation can be used for plural user symbol sequences, also of various widths.

In the following, further features of the invention and embodiments thereof will be described, also with reference to the drawings in which
- Fig. 1: shows a prior art structure,
- Fig. 2: shows a fundamental approach according to the invention,
- Fig. 3: shows a processing structure for various symbol streams,
- Fig. 4: shows a tree structure for determining parameters, particularly offsets mk of individual symbol streams,
- Fig. 5: shows a multiuser receiving structure,
- Fig. 6: shows a multiuser sending structure,
- Fig. 7: shows sub-channel assignment structures.

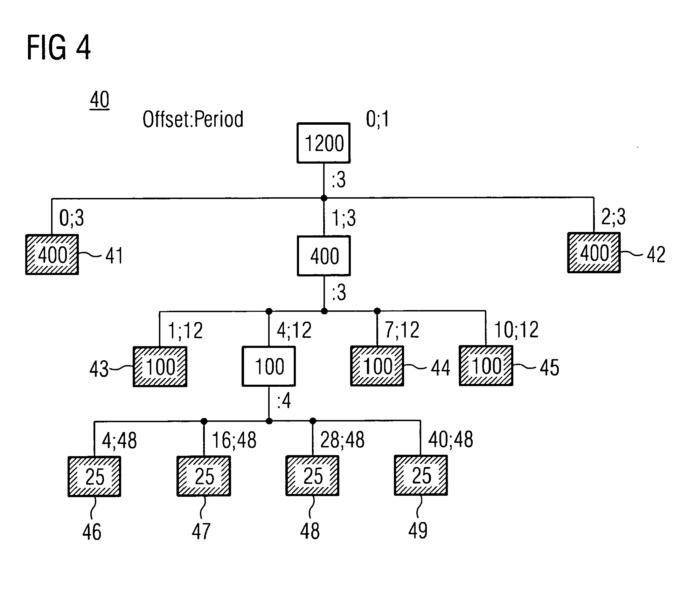

In the following, as shown in Fig. 4, the following numbers are, by way of example, assumed: In an FDMA environment, 1200 sub-carriers (sub-channels) are available. These channels may be allocated to data transfer of users according to earlier agreements (band-width, costs). In Fig. 4, the white boxes 40 show the available (not assigned) sub-channels, whereas the grey boxes show the sub-channels assigned as a group. The structure of Fig. 4 may best be understood from top to bottom as an iterative sub-channel assignment. At the beginning, all 1200 sub-channels are not assigned. It is then assumed that two users obtain each 400 sub-channels (left and right box), so that 400 of the initially 1200 remain unassigned. They are further assigned to 3 users receiving 100 sub-channels each so that 100 sub-channels remain unassigned. It is assumed that these 100 unassigned sub-channels are assigned to 4 users receiving 25 sub-channels each. The width of the DFT/iDFT may correspond to the total number of sub-channels or may be an integer fraction thereof.

Since the method according to the invention requires periodic allocation of various user streams to the outputs of the DFT/iDFT, the width of the DFT/iDFT should be an integer multiple to all possible symbol stream length, i.e. also an integer multiple to all possible numbers of sub-channels allocated to one user. The above-mentioned value of 1200 is 2*2*2*2*3*5*5 and supports thus sub-channel numbers 1, 2, 3, 4, 5, 6, 8, 10, 12, 15, 16, 20, 24, 25, 30, 40, 48, 50, 60, 75, 80, 100, 120, 150, 200, 240, 300, 400, 600 and 1200. If the DFT/iDFT width and thus also the number of simultaneously processable sub-channels is for example 1152, this exhibits the prime factors 2^7 and 3^2. With these prime factors, other numbers of sub-channels allocated to one user ("resource blocks") can be supported.

Figure 2 shows as a very fundamental block diagram important features of the invention. 21 is a component for, or a step of, adding repetitions to one or more symbol sequences. The repetition is preferably made such that the sequence as a whole is repeated, so that for example "abc" would under a double repetition become "abcabc". 22 is a means for, or a step of, frequency shifting, particularly by multiplicatively applying a term exp(-j*2*Π*s), the factor s to be described later. Such a factor is applied to every individual symbol of the various repeated sequences, and the result is, as indicated, "a'b'c'a"b"c"". It is noted that later repetitions of earlier symbols receive a different multiplicative factor so that after application of the frequency shift, repeated symbols are no longer the same. The resulting symbol sequence is input into a Fourier transformer 23 of suitable width (width 6 in the shown example because the repeated sequence comprises 6 symbols). In the sending case, step/means 23 is a Fourier transformation (FFT/DFT). In the case of receiving, step/means 23 is an inverse Fourier transformation (iFFT/iDFT).

The results are spaced Fourier transforms "A B C " of the original input sequence, the spacing corresponding to the repetition rate. Figure 2 shows the processing of one symbol sequence only. The output of FFT 23 shows that there are blanks between the Fourier transform outputs. These could be used for other symbol sequences, if properly prepared, particularly such that the results thereof fall into the blanks and not onto the outputs occupied by the already processed symbol sequence. The components 21 to 23 in Fig. 2 together with possibly some post-processing, could replace component 13 in Fig. 1 in order to change the prior art device of claim 1 into a device according to the invention.

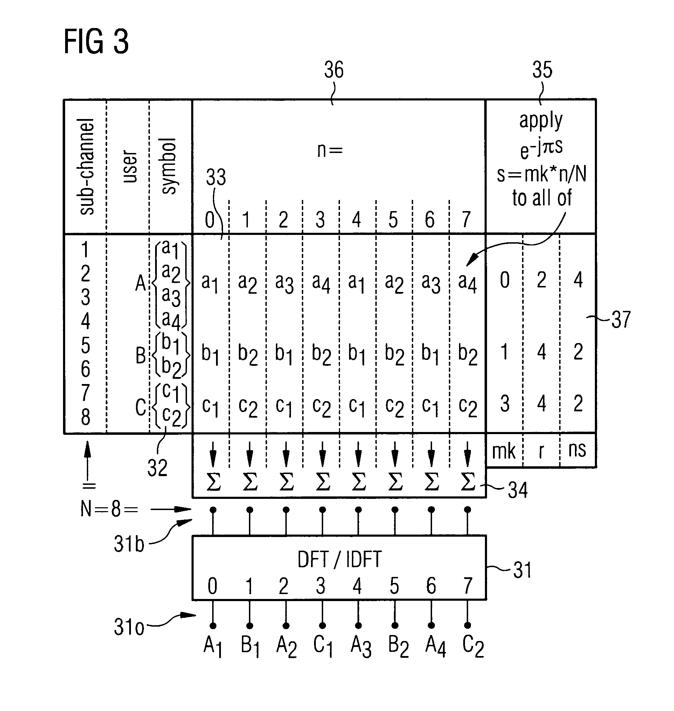

Figure 3 shows the case that plural symbol sequences are processed. In this Figure, a DFT/iDFT width of 8 corresponding to 8 simultaneously processable sub-channels is assumed. It is further assumed that a user A has 4 sub-channels assigned, whereas users B and C, respectively, have two sub-channels assigned. This is shown on the left hand side of Fig. 3. It is assumed that on the user A sub-channels at a certain point of time symbols a1, a2, a3 and a4 are transmitted, and on the sub-channels for users B and C symbols b1, b2, c1, c2 are transmitted at the same time. This is shown in column 32 of Fig. 3.

Box 33 shows the repeated sequences. Repetition is made such that the sequence including repetitions has a number of symbols corresponding to the number of simultaneously processable sub-channels, i.e. 8 in the shown example. This uses the prerequisite that the number of sub-channels allocated to a user (4 or 2 in the shown example) divide the number of simultaneously processable sub-channels (8 in the example) without remainder. The repetition rate r for user A is 2 because the number of symbols ns of "his" symbol sequences is 4. Likewise, for users B and C the repetition rate r is 4 because their respective numbers of symbols is 2. These numbers are shown in box 37 on the right hand side of Fig. 3.

To all symbols in box 33, a multiplicative term of exp(-j*2*Π *s) is applied with s = mk*n/N. The value N is the number of simultaneously processable sub-channels, i.e. 8 in the given example. The value n is an index designating the position of a particular symbol to which the particular factor is to be applied in the sequence including the repetitions. This value n is shown in box 36. As can be seen, it runs from 0 to 7, or generally, from 0 to N-1. Likewise, it could run from 1 to N.

The value mk defines the offset of the transformation results on the parallel output terminals of the DFT/iDFT. These values mk must be selected such that the results appear in an appropriately separated manner, to be described.

Next, symbolized in box 34, equally positioned symbols in the various symbol sequences having received the respective multiplicative factors as described above (and thus called "modified symbol sequences") are added. The addition, for example in the left most column, is not simply a1 + b1 + c1. Rather, these values have received before the addition the respective exp(...) term described earlier and shown in box 35. Due to the offset, the exp(...) term is different for the respective first symbol positions of the different symbol sequences including the repetitions. Thus, one obtains 8 (or generally N) sums. These are fed to parallel inputs 31i of a Fourier transformation or inverse Fourier transformation, depending on whether sending or receiving is to be accomplished, respectively.

DFT/iDFT 31 has a number of output 31o corresponding to the number of inputs 31i, i.e. 8 outputs (or generally speaking: N outputs corresponding to N inputs). These outputs show at the respective output terminals. The sequence a1, a2, a3, and a4 transforms into A1, A2, A3, and A4. Because it was repeated twice, the outputs appear with respectively one blank output in between. Since the offset mk for user A was selected to be 0, the output sequence starts at 0 and continues through 2, 4, and 6. For user B, the repetition rate was 4 so that every fourth output shows the outputs of user B. Due to user offset mk = 1 for user B, the outputs B1 and B2 appear on outputs 1 and 5 of DFT/iDFT 31. For user C a user offset mk of 3 was selected because with the assignment made so far, the outputs 3 and 7 were the remaining available outputs. Accordingly, outputs C1 appear on output terminals 3 and 7, as shown.

Generally speaking, the selection of the user offsets mk must be made in view of the respective length of symbol sequence of the respective user and in view of earlier assignments and selections such that the transformation of the respective sequence receiving the offset falls on yet free output terminals. As can be seen in box 35 of Fig. 3, the value mk appears as a factor in the exp(...) term. Through this, it determines after the DFT/iDFT 31 the starting point of the respective outputs. This makes use of the above-mentioned property (b) that a cyclic shift of the signal corresponds to a frequency shift of the spectrum. Taken together with the property that a repetition renders a periodic spectrum having length in between according to the repetition rate, the respective data can be nested such that transformation output corresponding to different users appear on different outputs. These outputs are spaced according to the repetition rate of the respective symbol sequence, and have an offset corresponding to the value mk defined for them.

It is noted in this respect that the sign of the exp-argument (j*2*n*n*mk/N) may be "+" or "-". It must be constant within one DFT/iDFT 31, and the subsequent post-processing depends on it as regards the positions of the various outputs.

Figure 4 shows for each sub-channel group assignment (resource block assignment) possible offsets mk and repetition rates r at the respective top right corner. 1200 is the number N of simultaneously processable sub-channels and is thus also the input width N of the Fourier transformation. If this would be assigned to one user, the corresponding output would start at the first output (offset mk = 0), and would from there on cover every available output, i.e. proceeding one by one with a step width 1. But, as said earlier, in the example it is assumed that the available sub-channels are not assigned to one user. Rather, it is assumed that two users 41, 42 receive 400 sub-channels each. This corresponds to a division by 3, 3 being one of the prime factors of 1200. Accordingly, 400 divides 1200 without remainder, and the 400 symbols appearing on the 400 sub-channels may be repeated 3 times in order to generate a cyclic pattern covering the input side of the DFT/iDFT. On the output side of the DFT/iDFT, for user 41 an offset mk of 0 is defined so that on the output side, the outputs for this user 41 occupy outputs 0, 3, 6, 9, 12, 15, .... It is further assumed that user 42 also obtains 400 sub-channels capable of transmitting 400 symbols, to be repeated three times for obtaining a cyclic pattern. On the output side, for this user an offset of 2 is defined so that its outputs occupy DFT/iDFT outputs 2, 5, 8, 11, 14, 17, ... which is interleaved with those of user 41. Thus, 400 sub-channels remain, and their outputs must be placed on outputs 1, 4, 7, 10, 13, 16, .... In the example, it is assumed that the remaining 400 sub-channels are not assigned to one particular user, but three more users 43, 44, and 45 receive 100 sub-channels each. Accordingly, each user receives 100 symbols at a time, to be repeated twelve times in order to generate on the input side a cyclic pattern corresponding to the width N of the DFT/iDFT. Since the repetition factor for users 43, 44, and 45 is 12, their outputs appear on the output side of DFT/iDFT at every twelve output. The user offsets mk is defined 1, 7, and 10 for user 43, 44, and 45, respectively. So, the output corresponding to user 43 occupies outputs 1, 13, 25, 37, ..., the output of user 44 is on outputs 7, 19, 31, 43, ..., and the output of user 45 is on outputs 10, 22, 34, 46, .... The remaining 100 sub-channels are allocated to users 46 to 49. Their outputs must be placed on the remaining free outputs 4, 16, 28, 40, 52, 64 .... Their respective step width is 48 corresponding to the repetition rate of the 25 input signals to be repeated 48 times in order to arrive at a cyclic pattern of 1200 symbols corresponding to the 1200 inputs of the DFT/iDFT. Their respective offsets are 4, 16, 28, and 40, and from the respective offset on they occupy every 48^{th} output. Thus, altogether the 1200 outputs of DFT/iDFT are occupied by separable data sorted according to user data streams. They appear in a cyclic manner on the outputs of the fixed size DFT/iDFT. Through this, a fixed size DFT/iDFT may be used for processing plural user input data streams with one large fixed size DFT/iDFT without requiring plural such transformation devices of different sizes.

The outputs of the DFT/iDFT 31 may be brought to appropriate post-processing, which may in a sender be an inverse Fourier transformation (iDFT/iFFT) corresponding to component 14 in Fig. 1. The outputs of the individual users may be mapped onto the iFFT 14 inputs in a desired way. The outputs can be converted to serial and fed to the analogue transmission circuit. In a receiver, the outputs of DFT/iDFT 31 are deinterleaved to obtain data sequences according to users. These sequences may be further transmitted.

Generally speaking, the offsets assigned to the various users have to be selected such that the spectra after the DFT/iDFT 31 are disjunct. A realizable combination of DFT length combinations can be visualized as a tree structure as shown in Fig. 4, similar to a CDMA code tree. To every node in the tree of Fig. 4 corresponds the line spectrum on the output side of the DFT/iDFT 31 which can be described by using the mentioned repetition factor r (distance of neighbouring lines) and offset mk (index of the first line). Therefore, each node can be described by a repetition factor r and an offset mk. The root node, the 1200 box in Fig. 4 has repetition factor 1 (i.e. would cover all outputs) and offset 0 (i.e. starting from the first one).

Every line spectrum with repetition factor p1 can be subdivided into k-line spectra with line distances p2 = k · p1 with k being an integer. In the tree this corresponds to branching into several child nodes, where the number ak of sub-carriers of the children are ak = av/k each with av being the number of sub-carriers of the father. Branching can therefore be described as a division by one of the prime factors of the number of simultaneously processable sub-channels. The offsets of the children of a node can be determined from the offset ov of the father and repetition factor wv of the father in the following way: On the offset of the first child is set to ok1 = ov. The offset oki of the i-th child is set to oki = ov + i*wv.

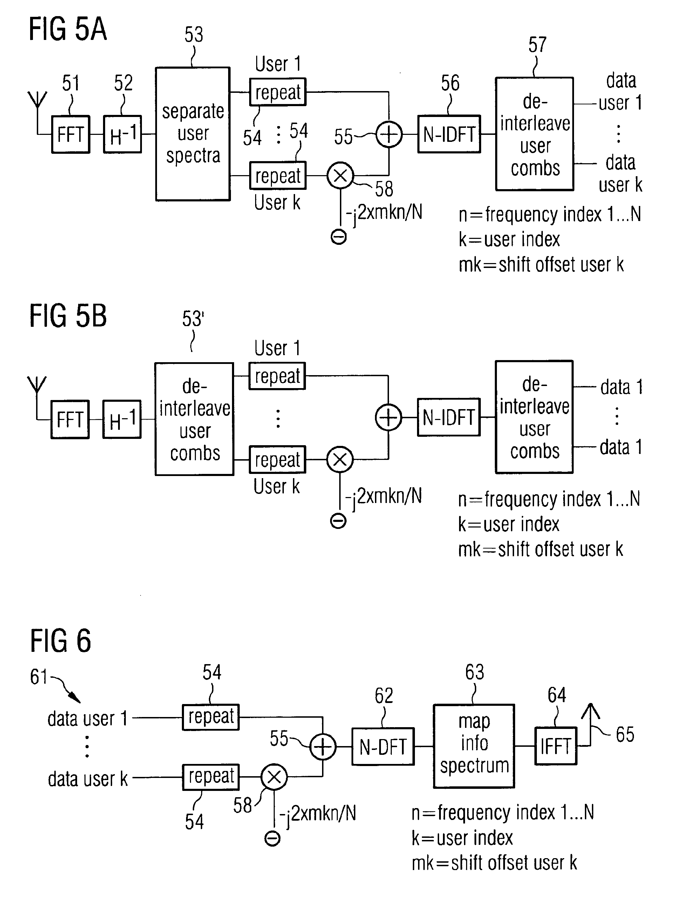

Figure 5 shows schematically hardware structures of receivers. 51 and 52 are pre-processings such as demodulations, channel estimations, and the like. 53 is a separator for user spectra which presents at the output the respective user data corresponding to the respectively assigned sub-channels of the respective user. On its output, the separator 53 shows a number of symbols corresponding to the number of simultaneously processable sub-channels. Its output would correspond to column 32 in Fig. 3. 54 are repeaters for making for each user symbol sequence a repetition such that a periodic sequence of a length corresponding to the input width of the IDFT appears. To all those users not having a user offset of 0, the shift corresponding to box 35 in Fig. 3 or corresponding to box 22 in Fig. 2 will be applied, as explained in detail with reference to Fig. 3. This is shown at reference numeral 58. 55 is the summation corresponding to box 34 in Fig. 3. 56 is the IDFT corresponding to 31 in Fig. 3. 57 is post-processing of the result. It may comprise de-interleaving of the user outputs from the IDFT outputs so that on its output the data of the various users are available.

The structure of Fig. 5b differs from that from Fig. 5a only in that due to a different channel allocation to users, the way of compiling user data is different. The Fig. 5a structure is suitable for localized SC-FDMA channel assignment. The structure of Fig. 5b with interleaving means 53' is suitable for a distributed SC-FDMA where user channels are regularly distributed across the available sub-channels.

Figure 6 is a block diagram showing the invention in a sending context. It may be for example the base station of a wireless system serving plural mobile equipments belonging to plural users. The base station receives data for the various users and knows in advance how many sub-channels are available for each user. A corresponding number of symbols can be transmitted at a time to each user. Such a number of symbols is formed into a sequence such that for each user a sequence of symbols of a length corresponding to the respectively assigned sub-channels is available and provided. This is symbolized with 61 in Fig. 6. Repeaters 54 are provided in the same way as in Fig. 5. Each symbol sequence is repeated such that the sequence including the repetitions has a length corresponding to the number of simultaneously processable sub-channels and corresponding to the input width of the DFT 62. At 58, a multiplicative term is applied to various symbol sequences in the same way as described with reference to Fig. 5 and as shown in Fig. 3. Summation 55 corresponds to that of Fig. 5. Box 62 is a Fourier transformer. It may be a DFT or an FFT. Its input width is N, and it has the same output width. It is noted in this respect that the number of lines amongst the components in Figs. 5 and 6 do not indicate the numbers of respective inputs and outputs. The lines there only show qualitatively signal flow. The N outputs of DFT 62 may go into a mapping unit 63 for mapping these outputs such that they appear on desired sub-channels. 64 is an inverse Fourier transformation preparing the signals for sending. 65 symbolizes the analogue part towards airing the signals.

As said, the invention may be applied both on the receiving side (Fig. 5) and on the sending side (Fig. 6). It may be applied both in cellular base stations for sending and/or receiving, and in mobile user equipment for sending/receiving, such as in cell phones, PDAs, wLAN components, laptops with radio access and the like.

The assignment of sub-channels and offsets to user data and symbol streams may be made by a scheduling component. This scheduling component may make the assignment for every submitted frame (number of symbols corresponding to the fixed input width N of the DFT/iDFT). Changing assignments of sub-channels and internal offsets may be necessary between frames because, needless to say, one user may be served and thus disappear from services, or a user may come new and require services not requested so far. The scheduler has access to respective organization information and information on the number of sub-channels for each user, and can determine in accordance thereto the particular channel assignment, repetition rates r for the respective symbol sequences, offsets mk for the individual sequences, and adjust these quantities so that in the respective computations they can be used as required.

The symbols in the respective user symbol sequences may be PSK Symbols (Phase Shift Keen Symbols) of an appropriate bit size or may be QAM Symbols (Quadrature Amplitude Modulation Symbols) of an appropriate bit size. They may be represented as complex numbers to which the exp(...) term is applied multiplicatively as required.

The Fourier transformer 31, 56, 62 may be a hardware device. It has fixed input width N and a corresponding output width N of signals. As said earlier, two or more of such transformers may be provided with different input widths N1, N2. The input widths are selected such that within the totally available number of sub-channels different user resource block sizes can be supported (number of sub-channels allocated to a user). As already said, this requires a suitable combination of prime factors of the input width number. Preferably, low prime factors such as 2, 3, and 5 are accommodated at least with power 2. Prime factor 2 may be accommodated with power 4, 3 may be accommodated with power 2 or 3, 5 may be accommodated with power 2 or 3. One transformer may be provided having width 1200 (2^4*3*5^2). Another transformer may be provided of width 1152 (2^7*3^2). With such an arrangement, plural possible resource block sizes can be supported according to the possible prime factor products with respectively at least one of the provided transformers.

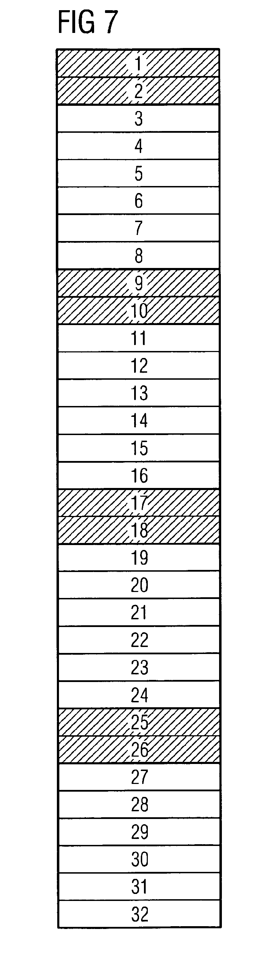

The method according to the invention can also support B-IFDMA (block interleaved frequency division multiple access) and B-EFDMA (block equidistant frequency division multiple access). One such scheme is shown in Fig. 7 which shows 32 sub-channels in which four 2-channel-blocks with respective 6 channels inbetween are assigned. The numbers of sub-carriers in a small user block, having two sub-carriers each in the shown figure, equals the number of used data streams in the implementation. The distance of the small user blocks equals the repetition factor which is the same for all streams/subcarriers. The frequency shift for neighboring sub-carriers increases by exp(-j*2*n/N).

According to the invention, the method supports multiplexing of different data streams for IFDMA, B-IFDMA, B-EFDMA. One fixed size (inverse) Fourier transformation is provided and can accommodate plural data streams. Thus, according to the invention with limited hardware a variety of data streams can simultaneously be handled.

So far, the input symbol sequences (see e.g. fig. 3) were described to be established according to users and sub-channels allocated to them, which makes sense from a factual point of view because then the output is also user- or receiver-specific. However, other constraints may make other symbol sequence arrangements more advantageous so that other symbol sequence compilation criteria than "same user" or "same source/destination address" or "same sender/receiver" may be more advantageous. Particularly, the invention may, but needs not necessarily require that symbols within one symbol sequence (such as a1, a2, a3, a4 in fig. 3) come from the same sender and/or go to the same receiver. Other compilation criteria may be "same application" (e. g. for having particular application-specific pre- or post processings applied), "same quality of service (QoS)", "same data type", "same source and/or destination hardware" or the like. Possibly lost receiver allocation of sub-channels can then be established through separate arrangements.

The invention may also be used in user equipments which require accommodation of only one user data stream (presented probably through plural sub-channels). The other sub-channels may be disregarded or may be set to 0 in processing.

## Claims

1. A frequency division multiple access receiving method by which one or more individual data sequences coded into one or more respective individual symbol sequences sent from one or more senders to a receiver via plural wireless sub-channels are received, comprising in said receiver the steps of:
a preprocessing step comprising forming from the signals of the respective sub-channels digital symbols (a1, a2, b1, b2, c1, c2, c3, c4) and obtaining symbol sequences a1 - a2, b1 - b2, c1 - c2 - c3 - c4),
a repetition step of repeating in all of said symbol sequences the individual symbols therein by a repetition number r for obtaining modified symbol sequences, wherein repetition numbers for different symbol sequences may be different,
a multiplying step of applying multiplicatively to the symbols of one or more of the modified symbol sequences a term exp(-j*2*n*mk*n/N), wherein mk is a shift offset of a respective sequence, n is a running index indicating the symbol position in the modified sequence and N is the number of simultaneously processed sub-channels,
an adding step of adding correspondingly positioned symbols across the modified symbol sequences for obtaining a sum sequence,
applying an inverse Fourier transformation, preferably a IDFT or an IFFT, in parallel to the sums of the sum sequence for obtaining a Fourier transform with outputs corresponding to sub-channels, and
post-processing the data resulting from the inverse Fourier transformation,
wherein the repetition number r is an integer fraction of the number N of simultaneously processed sub-channels and the shift offset mk is determined such as to obtain an inverse Fourier transform in which the outputs from respectively different symbol sequences are located on respectively different outputs.

2. A frequency division multiple access sending method by which one or more individual data sequences coded into one or more respective individual symbol sequences are sent from a sender to a receiver via plural wireless sub-channels, comprising in said sender the steps of:
a repetition step of repeating in all of said symbol sequences the individual symbols therein by a repetition number r for obtaining modified symbol sequences, wherein repetition numbers for different symbol sequences may be different,
a multiplying step of applying multiplicatively to the symbols of one or more of the modified symbol sequences a term exp(-j*2*n*mk*n/N), wherein mk is a shift offset of a respective sequence, n is a running index indicating the symbol position in the modified sequence and N is the number of simultaneously processed sub-channels,
an adding step of adding correspondingly positioned symbols across the modified symbol sequences for obtaining a sum sequence,
applying a Fourier transformation, preferably a DFT or an FFT, in parallel to the sums of the sequence for obtaining a Fourier transform with outputs corresponding to sub-channels, and
post-processing the Fourier transform for wireless sending and sending it,
wherein the repetition number r is an integer fraction of the number N of simultaneously processed sub-channels and the shift offset mk is determined such as to obtain said Fourier transform such that the outputs from respectively different symbol sequences are located on respectively different sub-channels.

3. The method according to one or more of the preceding claims, which is a single channel frequency division multiplex access method (SC-FDMA).

4. The method according to one or more of the preceding claims, wherein the symbols and the sums comprise QAM symbols or PSK symbols, preferably represented as complex numbers.

5. The method according to one or more of the preceding claims, wherein the Fourier transform is rendered by a hardware or firmware device of fixed input width N.

6. The method of claim 5, wherein two or more Fourier transform hardware or firmware devices of different widths (N1, N2) are provided.

7. The method of claim 6, wherein the input widths are non-prime numbers and have prime factors below 24.

8. The method of claim 6 or 7, wherein the factors of 2^3 and 5^2 and 3^2 are comprised in at least one of the width numbers.

9. The method according to one or more of the claims 5 to 8, wherein the input width N is the same as the number of sub-channels to be processed simultaneously in the Fourier transformation.

10. The method according to one or more of the claims 5 to 9, wherein the input width N is the same as the number ns of symbols of a symbol sequence multiplied by the repetition rate r of said symbol sequence.

11. The method according to one or more of the preceding claims wherein the running index changes from one to the next processed symbol in a sequence by 1.

12. The method according to one or more of the preceding claims, comprising an organizing step of determining the sub-channels to be processed in parallel, forming symbol sequences from the signals of the determined sub-channels, rendering the repetition of the symbols transmitted therein, and determining the offset mk for each of said sequences.

13. The method according to claim 1, in which preprocessing comprises one or more of the steps of demodulating and digitizing the received signals, forming said symbols from said digitized signals, applying a Fourier transformation to said received signals and storing the results, channel estimation, separating user spectra or de-interleaving user sub-channels, wherein the repetition step is made starting from the stored results.

14. The method according to claim 1 or 13, in which post-processing comprises de-interleaving user data.

15. The method according to claim 2, in which a preprocessing step comprises coding user data into appropriate symbols.

16. The method according to claim 2 or 15, in which post-processing comprises a spectrum mapping step.

17. The method according to one or more of the preceding claims, executed in a base station of a cellular system.

18. The method according to one or more of the preceding claims, executed in a mobile equipment in a cellular system.

19. Device for executing the method according to one or more of the preceding claims.
